# EUROPEAN PATENT APPLICATION

(11) **EP 1 652 664 A1**
(43) Date of publication of application: **03.05.2006**
(21) Application number: 05256638.7
(22) Date of filing: 26.10.2005
(51) Int. Cl.: B32B 27/32, F16L 58/00, F16L 59/00

(54) **Multilayer tube assembly and methods for forming and using the same**

(30) Priority: 29.10.2004 US 977704
(71) Applicant: CommScope, Inc. of North Carolina, Hickory, NC 28602 (US)
(72) Inventor: Biebuyck, Ghislain, CommScope Europe SPRL, B-7180 Seneffe (BE)
(74) Representative: Horner, Martin Grenville

(57) **Abstract**

A multilayer tube assembly for use with a fluid includes an inner tube, an outer layer, and an adhesive layer. The inner tube has inner and outer opposed surfaces. The inner surface of the inner tube defines an open, longitudinally extending tube passage to allow flow of the fluid therethrough. The inner tube is formed of metal. The outer layer has an inner surface and surrounds at least a portion of the inner tube. The outer layer is formed of a polymeric material. The adhesive layer is interposed between the outer surface of the inner tube and the inner surface of the outer layer. The adhesive layer secures the outer layer to the inner tube.

## Description

### Field of the Invention

The present invention relates to tubes and pipes and, more particularly, to multilayer tube assemblies and methods for forming and using the same.

### Background of the Invention

Flexible multilayer tubes or hoses are commonly employed in fluid distribution systems and heating systems. For example, multilayer hoses are used to distribute water for sanitary applications (*e.g*., drinking water) and gas. Radiant or heat exchange heating (and/or cooling) systems often include multilayer hoses through which heated (and/or cooled) water is circulated" the multilayer hose being installed in a floor, wall, ceiling, *etc*.

Commonly, the multilayer tubes as discussed above include three or more tubular layers. A barrier layer is sandwiched between a plastic inner layer and a plastic outer layer. The barrier layer may serve as an oxygen barrier to reduce or prevent oxygen from permeating through the plastic layers and oxygenating the circulating fluid. Excess oxygen in the fluid may tend to accelerate corrosion of ferrous materials in the system. Aluminum is commonly used to form the intermediate barrier layer.

### Summary of the Invention

According to embodiments of the present invention, a multilayer tube assembly for use with a fluid includes an inner tube, an outer layer, and an adhesive layer. The inner tube has inner and outer opposed surfaces. The inner surface of the inner tube defines an open, longitudinally extending tube passage to allow flow of the fluid therethrough. The inner tube is formed of metal. The outer layer has an inner surface and surrounds at least a portion of the inner tube. The outer layer is formed of a polymeric material. The adhesive layer is interposed between the outer surface of the inner tube and the inner surface of the outer layer. The adhesive layer secures the outer layer to the inner tube. According to some embodiments, the inner tube includes a first metallic layer including the inner surface of the inner tube and a second metallic layer surrounding the first layer and including the outer surface of the inner tube.

According to further embodiments of the present invention, a system includes a supply of a fluid, a tube network, and a fluid transport apparatus. The tube network includes at least one multilayer tube assembly. Each multilayer tube assembly includes an inner tube, an outer layer, and an adhesive layer. The inner tube has inner and outer opposed surfaces. The inner surface of the inner tube defines an open, longitudinally extending tube passage to allow flow of the fluid therethrough. The inner tube is formed of metal. The outer layer has an inner surface and surrounds at least a portion of the inner tube. The outer layer is formed of a polymeric material. The adhesive layer is interposed between the outer surface of the inner tube and the inner surface of the outer layer. The adhesive layer secures the outer layer to the inner tube. According to some embodiments, the inner tube includes a first metallic layer including the inner surface of the inner tube and a second metallic layer surrounding the first layer end including the outer surface of the inner tube.

According to method embodiments of the present invention, a method for forming a multilayer tube assembly includes forming an inner tube having inner and outer opposed surfaces, the inner surface of the inner tube defining an open, longitudinally extending tube passage to allow flow of the fluid therethrough, wherein the inner tube is formed of metal; applying an adhesive layer to the outer surface of the inner tube; forming an outer layer having an inner surface and surrounding at least a portion of the inner tube such that the adhesive layer is interposed between the outer surface of the inner tube and the inner surface of the outer layer, wherein the inner tube is formed of a polymeric material; and adhering the outer layer to the inner tube using the adhesive layer.

According to further method embodiments of the present invention a method for providing plumbing in an architectural structure for a flow of a fluid includes installing a tube network in the structure. The tube network includes at least one multilayer tube assembly. Each multilayer tube assembly includes an inner tube, an outer layer, and an adhesive layer. The inner tube has inner and outer opposed surfaces. The inner surface of the inner tube defines an open, longitudinally extending tube passage to allow flow of the fluid therethrough. The inner tube is formed of metal. The outer layer has an inner surface and surrounds at least a portion of the inner tube. The outer layer is formed of a polymeric material. The adhesive layer is interposed between the outer surface of the inner tube and the inner surface of the outer layer. The adhesive layer secures the outer layer to the inner tube.

Objects of the present invention will be appreciated by those of ordinary skill in the art from a reading of the figures and the detailed description of the preferred embodiments which follow, such description being merely illustrative of the present invention.

### Brief Description of the Drawings

**Figure 1** is a partially cut away perspective view of a multilayer tube assembly according to embodiments of the present invention;
**Figure 2** is a cross-sectional view of the tube assembly **of Figure 1** taken along the line **2-2** of **Figure 1**;
**Figure 3** is a partially cut away perspective view of a multilayer tube assembly according to further embodiments of the present invention;
**Figure 4** is a cross-scetional view of the tube assembly of **Figure 3** taken along the line **4-4** of **Figure 3**;
**Figure 5** is a flow chart illustrating method embodiments according to the present invention for forming tube assemblies;
**Figure 6** is a schematic diagram of an apparatus for forming tube assemblies in accordance with embodiments of the present invention; and
**Figure 7** is a schematic diagram of a building structure and systems therein including tube assemblies as shown in **Figures 1** and **3.**

### Detailed Description of Embodiments of the Invention

In the drawings, the thickness of lines, layers and regions may be exaggerated for clarity. It will be understood that when an element is referred to as being "on" another element, it can be directly on the other element or intervening elements may also be present In contrast, when an element is referred to as being "directly on" another element, there are no intervening elements present. It will be understood that when an element is referred to as being "connected" or "attached" to another element, it can be directly connected or attached to the other element or intervening elements may also be present In contrast, when an element is referred to as being "directly connected" or "directly attached" to another element, there are no intervening elements present.

As used herein, the term "and/or" includes any and all combinations of one or more of the associated listed items.

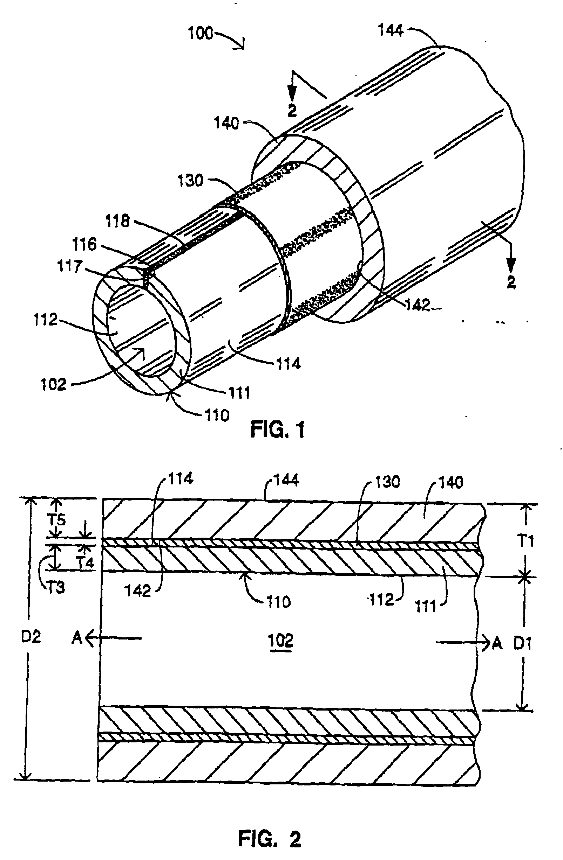

With reference to **Figures 1** and **2,** a multilayer tube assembly **100** according to embodiments of the present invention is shown, therein. Generally, the tube assembly **100** has a longitudinal axis **A-A (Figure 2**). The multilayer tube assembly **100** includes an inner tube **110,** a surrounding outer layer **140,** and an intermediate layer of adhesive **130.** According to some embodiments, each of the inner tube **110,** the adhesive **130,** and the outer layer **140** are cylindrical and concentrically arranged about the axis **A-A.** The inner tube **110** has an inner surface **112** that defines a longitudinally extending tube passage **102.** As discussed below, the inner tube **110** is formed of a metallic material while the outer layer **140** is formed of a polymeric material. The inner tube **110,** the adhesive **130,** and the outer layer **140** are combined so as to form an integral structure. According to some embodiments, the overall tube assembly **100** is flexible.

According to some embodiments, the tube passage **112** has a nominal inner diameter **D1 (Figure 2**) of between about 0.2 and 2.755 inches. The overall tube assembly **100** has a nominal outer diameter **D2 (Figure 2**) of between about 0.275 and 2.952 inches. According to some embodiments, the nominal overall wall thickness **T1** (**Figure 2**) of the tube assembly **100** is between about 0,039 and 0.197 inch. The tube assembly **100** may be formed of any discrete length or of indeterminate length.

The inner tube **110** is formed of a single layer **111.** The inner surface **112** and the outer surface **114** of the layer **111** serve as the inner and outer surfaces of the inner tube **110.** The layer **111** may be formed from a thin, flat, metallic strip that is bent into an elongate cylinder or tubular shape as shown in **Figure 1** such that the opposing lateral edges **116, 117** of the strip are positioned adjacent one another and joined by a longitudinally extending seam **118.** The seam **118** may be formed by welding and/or another suitable joining technique, as discussed below, According to some embodiments and as illustrated, the seam **118** is preferably a bun welded seam. According to other embodiments, the seam can be overlap welded.

According to some embodiments, the layer **111** is formed of copper. According to some embodiments, the nominal thickness **T3 (Figure** 2) of the layer **111** is between about 0.008 and 0.0236 inch. According to more particular embodiments, the thickness T3 is between about 0.008 and 0.0157 inch.

The welded inner tube **110** forms a mechanically continuous tube. According to some embodiments, the inner tube **110** is preferably impervious to the intended fluid at all intended temperatures and pressures. Accordingly, the fluid will flow through the inner tube **110** without contacting the adhesive **130** or the outer layer **140.**

The adhesive **130** is interposed between the outer surface **114** of the inner tube **110** and an inner surface **142** of the outer layer **140** and secures the outer layer **140** to the inner tube **110.** According to some embodiments, the adhesive layer **130** is selected from the group consisting of ethylene acrylic acid (EAA), ethylene methyl acrylate (EMA), and mixtures and formulations thereof. According to some embodiments, the adhesive layer 130 is EAA, for example, as described in U.S. Patent No. 4,494,023 to Gindrup and U.S. Patent No. 3,349,455 to Mildner. Other copolymers that provide the desired adhesive properties may also be used. According to some embodiments, the layer of adhesive **130** has a nominal thickness **T4 (Figure** 2) of between about 0.002 and 0.006 inch.

According to some embodiments, the outer layer **140** is formed of a polyethylene. According to some embodiments, the layer **140** includes at least one of cross-linked polyethylene (PEX), polyethylene of raised temperature resistance (PE-RT), high density polyethylene (HDPE) and a low smoke zero balogen (halogen free) (LS2H) compound. A material of the outer layer 140 may include additives which can enhance physical properties or facilitate manufacturing.

According to some embodiments, the outer layer **140** has a nominal thickness T5 **(Figure 2)** of between about 0.031 and 0,078 inch. According to more particular embodiments, the thickness T5 is between about 0.039 and 0.059 inch.

The tube assembly **100** may be particularly suitable for use as heating tubing or sanitary tubing. The copper inner tube 110 serves as an oxygen barrier to prevent or inhibit oxygenation of fluid flowing through the tubing.

The inner tube **110** provides enhanced mechanical strength as compared to tubing including only a polyethylene layer, for example. The inner tube **110** also tends to retain its shape when bent. In this way, the inner tube **110** aids in handling and insulation by resisting "spring back" that the resilient polyethylene outer layer **140** may tend to induce. The adhesive layer **130** may increase the bending properties of the tube assembly **100.**

Of particular significance in sanitary tube applications, the inner surface **112** in contact with the flowing fluid is formed of copper, rather than plastic as in certain conventional multilayer or composite tubes. As a result, the risks and concerns regarding Legionella disease (Legionnaires' disease) commonly associated with plastic pipes are obviated.

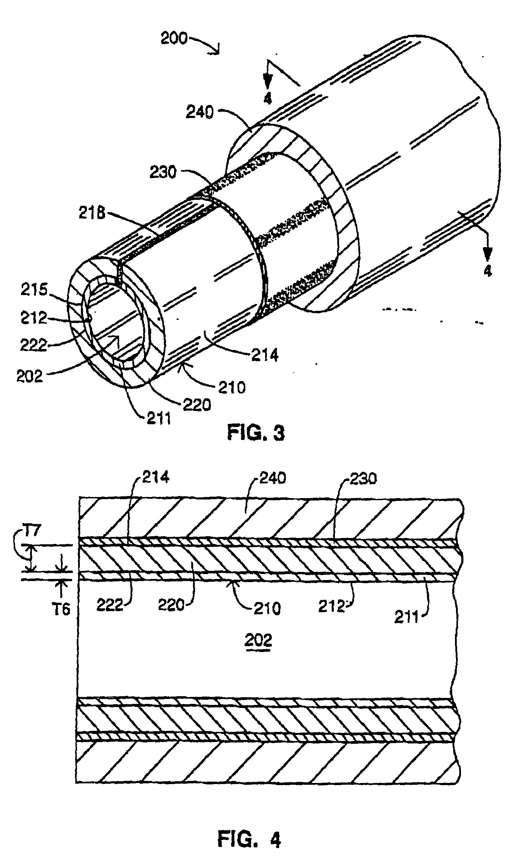

With reference to **Figures 3** and **4,** a multilayer tube assembly **200** according to further embodiments of the present invention is shown therein. The multilayer tube assembly **200** includes a layer of adhesive **230** and an outer layer **240** corresponding to the layer of adhesive **130** and the outer layer **140,** respectively. The tube assembly **200** differs from the tube assembly **100** in that the inner tube **210** of the tube assembly **200** is of a bimetallic construction. More particularly, the inner tube **210** includes a first inner layer **211** and a second outer layer **220.** The inner surface **212** of the inner layer **211** serves as the innermost surface of the tube assembly **200** and defines the tube passage **202.** The outer surface **214** of the outer layer **220** is bonded to the inner surface of the outer layer **240** by the adhesive layer **230.**

The layers **211** and **220** are separately formed but bonded to one another at their respective interfacing surfaces **215** and **222** to form an integral, unitary, metal structure. The surfaces **215** and **222** may be metallurgically bonded to one another. The lateral edges of the layers **211, 220** are welded or otherwise joined to form a seam **218** corresponding to the seam **118.** The inner tube **210** forms a mechanically continuous tube as described above with regard to the inner tube **110.**

According to some embodiments, the layers **211** and **220** are formed of different metals. According to certain preferred embodiments, the layer 211 is formed of copper (pure copper or copper alloy) and the layer **220** is formed of aluminum. According to some embodiments, the Layer **211** is formed of copper and has a nominal thickness **T6 (Figure 4**) of between about 0.002 and 0.006 inch. According to certain embodiments, the layer **220** is formed of aluminum (pure aluminum or aluminum alloy) and has a nominal thickness **T7 (Figure 4**) of between about 0.006 and 0.039 inch. According to some embodiments, the inner layer **211** is formed of copper and forms between about 15 and 33% of the thickness of the inner tube **210** and the outer layer **220** is formed of aluminum and forms substantially the remainder of the thickness of the inner tube **210.**

The multilayer tube assembly **200** may provide the advantages discussed above with respect to the tube assembly **100.** Additionally, the additional aluminum layer **220** may serve to provide enhanced shape retention when the tube assembly **200** is bent Also, the tube assembly **200** may be lighter than a comparable tube assembly **100** with similar performance characteristics.

With reference to **Figures 1,5** and **6,** multilayer tubes may be formed using methods and apparatus as follows in accordance with embodiments of the present invention. For the purposes of illustration, the methods will be described with reference to the tube assemblies **100, 200.** However, tube assemblies of other constructions can be formed using the methods of the present invention.

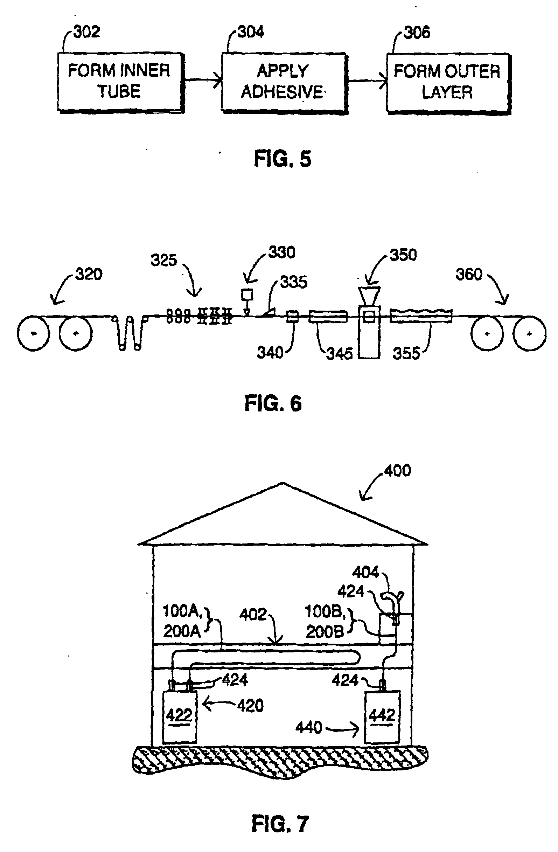

The inner tube **110 or 210 is** formed **(Figure 5**; Block **302**). In the case of the tube **110,** a flat, relatively narrow, elongate strip or tape of copper is provided from a reel **320** or the like, The metal strip is bent about its longitudinal axis by a bending or roll-forming apparatus **325** to form a cylindrical, tubular preform. The metal strip is bent such that the lateral edges thereof meet with one another or define a longitudinal gap of a prescribed width. The strip may be bent by a series of forming rolls.

The bent preform passes to a welding station **330** where the lateral edges of the strip are pressed together by further rolls and welded to form the continuous, longitudinally welded seam **118** (as shown, a butt welded seam). The edges can be welded by any suitable technique, including high frequency (HF) welding tungsten inert gas (TIG) welding, plasma welding or laser welding. According to some embodiments, the seam **118** is preferably HF welded. If necessary, any weld bead formed by the welding step may be removed by a scraper **335** or the like. The tube is then advanced through a shaping die **340.**

The inner tube **210** is formed in the same manner as described above for the inner tube **110**, except that the preform is formed from a flat, relatively thin, narrow, elongate, bimetallic strip or tape including a layer of copper prebonded to a layer of aluminum. The remainder of the steps are the same for both the tube assembly **100** and the tube assembly **200.**

The inner tube **110, 210** is thereafter passed through a degreasing unit **345** that cleans the outer surface of the metallic layer to improve the bond between the outer surface and the adhesive layer.

The inner tube **110, 210** is thereafter passed to an Adhesive applying apparatus **350** where the adhesive layer **130, 230** is applied to the outer surface of the inner tube **110, 210 (Block 304).** According to some embodiments, the adhesive is circumferentially extruded onto the inner tube **110, 210.** Alternatively, the adhesive may be applied by other techniques such as spraying or immersion. The outer layer **140, 240** is formed about the adhesive layer **130, 230 (Block 306).** According to some embodiments, the outer layer **140, 240** is circumferentially extruded onto the adhesive layer **130, 230.** According to some embodiments, the adhesive layer **130, 230** and the outer layer **140, 240** are co-extruded (*e.g.*, using the apparatus **350).** The adhesive and outer layers can be co-extruded using a dual crosshead. The outer layer may be applied (*e.g.,* extruded) separately from the adhesive layer. The heat of the extruded material for forming the outer layer **140, 240** may serve to activate the adhesive layer **130, 230** to thereby form a bond between the adhesive layer **130, 230** and the outer surface of the inner tube **110, 210** and/or the inner surface of the outer layer **140, 240.**

The tube assembly **100, 200** thus formed may thereafter pass through a cooling unit **355** (*e.g.,* a cooling trough) and be wound onto a reel by a coiling apparatus **360.**

Those skilled in this art will recognize that the steps set forth above can be carried out at separate stations, as part of a single continuous manufacturing line, or some combination of each. The tube assemblies **100, 200** may also be produced by other techniques known to and/or recognized by those skilled in this art as being suitable for manufacturing composite tubes.

As discussed above, the multilayer tube assemblies of the present invention may be used as heating tubes, sanitary tubes or gas tubes. Referring to **Figure 7**, exemplary usages of the tube assemblies **100, 200** are shown therein. A building structure **400** such as a residence or commercial structure has a floor **402.** A radiant heating system **420** is operable to provide heat to the structure. More particularly, the system **420** includes a heating apparatus (*e.g.,* a boiler) **422** and a network or length of multilayer tube assembly **100A** or **200A** constructed as described above for the multilayer tube assemblies **100** or **200.** The tube assembly **100A, 200A** is operatively connected to the heating apparatus **422** by suitable fittings **424** (*e.g.,* press fittings) to provide a circulation loop. A supply of fluid is heated by the heating apparatus **422** and circulated (*e.g.*, by a pump or other forced flow apparatus forming a part of the heating apparatus **422** or otherwise) through the loop of tubing **100A, 200A** so that the heat from the heating apparatus **422** is transferred to the floor **402.** The tube assembly **100A, 200A** may be located in or under the floor **402,** a wall of the structure **400,** or other suitable location. The circulated heat transfer fluid may be water, for example.

Referring again to **Figure 7**, the structure **402** is also provided with a sanitary water supply system **440.** The system **440** includes a water supply apparatus **442** such as a hot water heater including a supply of a fluid. According to some embodiments, the fluid is water. According to more particular embodiments, the fluid is potable water. According to some embodiments, the water is a hot water supply and has a temperature of between about 40 and 95°C. The water supply apparatus **442** is fluidly connected to a dispenser **404** by a length of multilayer tube assembly **100B** or **200B** corresponding to the multilayer tube assembly **100** or **200.** The tube assembly **100B**, **200B** is connected to the water supply apparatus **442** and the dispenser **404** by fittings **424.**

The multilayer tube assemblies **100**, **200** according to the present invention may be used for the transport of any suitable fluid including liquids, gases, and mixtures thereof.

The multilayer tube assemblies **100, 200** may also include further outer layers, such as smooth or corrugated conduit, that surround the outer layers **140, 240.**

According to some embodiments, the tube assemblies of the present invention (*e.g.,* the tube assembly **100** or **200)** satisfy or comply with the performance requirements of American Society for Testing and Materials (ASTM) Standard Specification F1281.00 and/or ASTM Standard Specification F1282.00.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modiflcations are intended to be included within the scope of this invention. Therefore, it is to be understood that the foregoing is illustrative of the present invention and is not to be construed as limited to the specific embodiments disclosed, and that modifications to the disclosed embodiments, as well as other embodiments, are intended to be included within the scope of the invention.

## Claims

1. A multilayer tube assembly for use with a fluid, the assembly comprising:
a) an inner tube having inner and outer opposed surfaces, the inner surface of the inner tube defining an open, longitudinally extending tube passage to allow flow of the fluid therethrough, wherein the inner tube is formed of metal;
b) an outer layer having an inner surface and surrounding at least a portion of the inner tube, wherein the outer layer is formed of a polymeric material; and
c) an adhesive layer interposed between the outer surface of the inner tube and the inner surface of the outer layer, wherein the adhesive layer secures the outer layer to the inner tube.

2. The assembly of Claim 1 wherein at least the inner surface of the inner tube is formed of copper.

3. The assembly of Claim 2 wherein the outer layer is formed of polyethylene.

4. The assembly of Claim 3 wherein the outer layer is formed of at least one of HDPE, PE-RT, PEX, and LSZH compound.

5. The assembly of Claim 1 wherein the outer layer is formed of polyethylene.

6. The assembly of Claim 5 wherein the outer layer comprises at least one of HDPE, PE-RT, PEX, and LSZH compound.

7. The assembly of Claim 1 wherein the adhesive layer is formed of an adhesive selected from the group consisting of ethylene acrylic acid, ethylene methylacrylate, and mixtures and formulations thereof.

8. The assembly of Claim I wherein the inner tube includes a longitudinally extending welded seam.

9. The assembly of Claim 8 wherein the welded seam is butt welded.

10. The assembly of Claim 1 wherein the tube passage has a nominal inner diameter of between about 0.2 and 2.755 inches.

11. The assembly of Claim 1 wherein the inner tube has a nominal wall thickness of between about 0.008 and 0.0236 inch.

12. The assembly of Claim 1 wherein the outer layer has a nominal wall thickness of between about 0.031 and 0.078 inch.

13. The assembly of Claim 1 wherein the adhesive layer has a thickness of between about 0.002 and 0.006 inch.

14. The assembly of Claim 1 wherein the inner tube includes a first metallic layer including the inner surface of the inner tube and a second metallic layer surrounding the first layer and including the outer surface of the inner tube.

15. The assembly of Claim 14 wherein the first and second layers are formed of different metals.

16. The assembly of Claim 15 wherein the first layer is formed of copper and the second layer is formed of aluminum.

17. The assembly of Claim 14 wherein the first layer has a nominal wall thickness of between about 0.002 and 0.006 inch and the second layer has a nominal wall thickness of between about 0.006 and 0.039 inch.

18. The assembly of Claim 14 wherein:
a) the first layer is bonded to the second layer;
b) the adhesive layer is interposed between the second layer and the inner surface of the outer layer; and
c) the adhesive layer secures the outer layer to the second layer.

19. The assembly of Claim 1 including a connector fitting secured to an end of the assembly and adapted to engage a second connector.

20. The assembly of Claim 1 wherein the assembly complies with ASTM F1281.00 and/or ASTM F1282.00.

21. A system comprising:
a) a supply of a fluid;
b) a tube network including at least one multilayer tube assembly, each multilayer tube assembly comprising:
1) an inner tube having inner and outer opposed surfaces, the inner surface of the inner tube defining an open, longitudinally extending tube passage to allow flow of the fluid therethrough, wherein the inner tube is formed of metal;
2) an outer layer having an inner surface and surrounding at least a portion of the inner tube, wherein the outer layer is formed of a polymeric material; and
3) an adhesive layer interposed between the outer surface of the inner tube and the inner surface of the outer layer,
wherein the adhesive layer secures the outer layer to the inner tube; and
c) a fluid transport apparatus operable to force the fluid to flow through the tube passage or passages of the at least one multilayer tube assembly.

22. The system of Claim 21 wherein at least the inner surface of the inner tube is formed of copper.

23. The system of Claim 21 wherein the outer layer is formed of polyethylene.

24. The system of Claim 23 wherein the outer layer comprises of at least one of HDPE, PE-RT, PEX, and LSZH compound.

25. The system of Claim 21 wherein the adhesive layer is formed of an adhesive selected from the group consisting of ethylene acrylic acid, ethylene methylacrylate, and mixtures and formulations thereof.

26. The system of Claim 21 wherein the inner tube includes a longitudinally extending welded seam.

27. The system of Claim 21 wherein:
a) the inner tube includes a first metallic layer including the inner surface of the inner tube and a second metallic layer surrounding the first layer and including the outer surface of the inner tube;
b) the first layer is bonded to the second layer,
c) the adhesive layer is interposed between the second layer and the inner surface of the outer layer,
d) the adhesive layer secures the outer layer to the second layer,
e) the first layer is formed of copper; and
f) the second layer is formed of aluminum.

28. The system of Claim 21 wherein the fluid is a liquid

29. The system of Claim 28 wherein the fluid is potable water.

30. The system of Claim 28 wherein the system includes a heater operable to heat the fluid.

31. A method for forming a multilayer tube assembly, the method comprising:
a) forming an inner tube having inner and outer opposed surfaces, the inner surface of the inner tube defining an open, longitudinally extending tube passage to allow flow of the fluid therethrough, wherein the inner tube is formed of metal;
b) applying an adhesive layer to the outer surface of the inner tube;
c) forming an outer layer having an inner surface and surrounding at least a portion of the inner tube such that the adhesive layer is interposed between the outer surface of the inner tube and the inner surface of the outer layer, wherein the inner tube is formed of a polymeric material; and
d) adhering the outer layer to the inner tube using the adhesive layer.

32. The method of Claim 31 wherein at least the inner surface of the inner tube is formed of copper.

33. The method of Claim 31 wherein the outer layer is formed of polyethylene.

34. The method of Claim 33 wherein the outer layer comprises at least one of HDPE, PE-RT, PEX, and LSZH compound.

35. The method of Claim 31 wherein the adhesive layer is formed of an adhesive selected from the group consisting of ethylene acrylic acid, ethylene methylacrylate, and mixtures and formulations thereof.

36. The method of Claim 31 wherein forming the inner tube includes:
a) bending a metal strip into a generally cylindrical tube pre-form; and
b) welding the pre-form to form a longitudinally welded seam therein.

37. The method of Claim 3 6 including forming the welded seam as a butt weld.

38. The method of Claim 36 including HF welding the pre-form to form the welded seam.

39. The method of Claim 36 including TIG welding, plasma welding, and/or laser welding the pre-form to form the welded seam.

40. The method of Claim 31 including co-extruding the adhesive layer and the outer layer onto the outer surface of the inner tube.

41. The method of Claim 31 wherein the inner tube includes a first metallic layer including the inner surface of the inner tube and a second metallic layer surrounding the first layer and including the outer surface of the inner tube.

42. The method of Claim 41 wherein forming the inner tube includes:
a) providing a bimetallic strip including the first and second layers pre-bonded to one another; and
b) bending the bimetallic strip to form the inner tube.

43. A method for providing plumbing in an architectural structure for a flow of a fluid, the method comprising:
a) installing a tube network in the structure, the tube network including at least one multilayer tube assembly, each multilayer tube assembly comprising:
1) an inner tube having inner and outer opposed surfaces, the inner surface of the inner tube defining an open, longitudinally extending tube passage to allow flow of the fluid therethrough, wherein the inner tube is formed of metal;
2) an outer layer having an inner surface and surrounding at least a portion of the inner tube, wherein the outer layer is formed of a polymeric material; and
3) an adhesive layer interposed between the outer surface of the inner tube and the inner surface of the outer layer,
wherein the adhesive layer secures the outer layer to the inner tube.

44. The method of Claim 43 wherein at least the inner surface of the inner tube is formed of copper.

45. The method of Claim 43 wherein the outer layer is formed of polyethylene.

46. The method of Claim 45 wherein the outer layer comprises at least one of HDPE, PE-RT. PEX, and LSZH compound.

47. The method of Claim 43 wherein the adhesive layer is formed of an adhesive selected from the group consisting of ethylene acrylic acid, ethylene methylacrylate, and mixtures and formulations thereof.

48. The method of Claim 43 wherein the inner tube includes a longitudinally extending welded seam.

49. The method of Claim 43 wherein:
a) the inner tube includes a first metallic layer including the inner surface of the inner tube and a second metallic layer surrounding the first layer and including the outer surface of the inner tube;
b) the first layer is bonded to the second layer;
c) the adhesive layer is interposed between the second layer and the inner surface of the outer layer; and
d) the adhesive layer secures the outer layer to the second layer;
e) the first layer is fanned of copper; and
f) the second layer is formed of aluminum.

50. The method of Claim 43 wherein installing the tube network includes mounting the tube network below a floor of the structure and operatively connecting the tube network to a fluid heater to provide a floor heating system.

51. The method of Claim 43 wherein installing the tube network includes operatively connecting the tube network to a supply of potable water.
